## Europäisches Patentamt
## European Patent Office
## Office européen des brevets

(11) Veröffentlichungsnummer: **0 008 122**
**B1**

(12) **EUROPÄISCHE PATENTSCHRIFT**

(45) Veröffentlichungstag der Patentschrift: **07.04.82**

(51) Int. Cl.³: **G 03 B 27/04**

(21) Anmeldenummer: **79102890.5**

(22) Anmeldetag: **09.08.79**

(54) Verfahren zum Kopieren einer Anzahl gerahmter Diapositive und Vorrichtung zur Durchführung des Verfahrens.

(30) Priorität: **10.08.78 GB 3287978**

(43) Veröffentlichungstag der Anmeldung:
**20.02.80 Patentblatt 80/4**

(45) Bekanntmachung des Hinweises auf die Patenterteilung:
**07.04.82 Patentblatt 82/14**

(84) Benannte Vertragsstaaten:
**CH DE FR GB**

(56) Entgegenhaltungen:
**DE - A - 2 810 848**
**DE - B - 1 097 272**
**GB - A - 201 032**
**US - A - 2 857 830**
**US - A - 2 943 553**

(73) Patentinhaber: **CIBA-GEIGY AG**
**Patentabteilung Postfach**
**CH-4002 Basel (CH)**

(72) Erfinder: **Moore, Michael Huntly**
**67 Coventry Road**
**Ilford, Essex (GB)**

(74) Vertreter: **Berg, Wilhelm, Dr. et al,**
**Mauerkircher Strasse 45**
**D-8000 München 80 (DE)**

Courier Press, Leamington Spa, England.

## Verfahren zum Kopieren einer Anzahl gerahmter Diapositive und Vorrichtung zur Durchführung des Verfahrens

Die Erfindung betrifft ein Verfahren zum Kopieren einer Anzahl gerahmter Diapositive, bei welchem die Diapositive in zueinander parallelen Reihen auf das kopiermaterial aufbelichtet werden, sowie eine Vorrichtung zur Durchführung des Verfahrens.

Photographische Diapositive sind positive Bildabzüge mit einer transparenten, durchsichtigen Unterlage und werden betrachtet, indem sie in einen Projektor eingebracht werden, durch welchen ein vergrössertes Bild auf eine Leinwand oder eine Wand geworfen wird. Um zu verhindern, dass die Diapositive beschädigt werden oder auf ihnen durch Fingerabdrücke starke Spuren hinterlassen werden, wenn sie in Projektoren verwendet werden, sind sie vorteilhafterweise entweder in Papp- oder Kunststoffrahmen gerahmt. Oft sollen positive Abzüge von Diapositiven gemacht werden, wobei direkt-positive Silberhalogenid-Material verwendet wird, wenn das Diapositive schwarz/weiss ist, oder wobei, wenn es sich um ein Farb-Diapositiv handelt, was im allgemeinen der Fall ist, entweder chromogenes Farb-Kopiermaterial, das im Umkehrverfahren verarbeitet wird, oder direkt-positives Silber-Farb-Bleichmaterial verwendet wird.

Alle zur Verfügung stehenden Verfahren, um eine positive Kopie von einem Diapositiv zu erhalten, sind zeitaufwendig und/oder teuer folglich wird oft zuerst ein kleiner Kontaktabzug von dem Diapositiv hergestellt, um zu sehen, ob sich von dem Diapositiv ein guter Abzug herstellen lässt und es kann ferner die für eine Vergrösserung erforderliche Belichtung bestimmt werden. Oft werden dann hierzu eine Anzahl Diapositive über dem Kopiermaterial angeordnet, um so eine Anzahl Kontaktabzüge bei einer Belichtung und weiterer Verarbeitung zu erhalten. Da es jedoch unpraktisch ist, die Diapositive aus ihrem Rahmen herauszunehmen, wird eine verhältnismässig grosse Fläche des Kopiermaterials von den Rändern der Rahmen verdeckt, wenn gleichzeitig von mehreren gerahmten Diapositiven Kontaktabzüge auf einem Blatt Kopiermaterial hergestellt werden. Hierdurch wird sehr teures Kopiermaterial vergeudet, insbesondere wenn es sich um Silber-Farb-Bleichmaterial handelt.

Die Erfindung soll daher ein Verfahren zum Abziehen einer Anzahl gerahmter Diapositive schaffen, bei welchem das verfügbare Kopiermaterial besser genutzt wird. Gemäss der Erfindung ist dies bei einem Verfahren der eingangs genannten Art durch die Merkmale im kennzeichnenden Teil des Anspruchs 1 erreicht.

Bei einer Abwandlung des erfindungsgemässen Verfahrens kann, wenn die Fläche des Kopiermaterials, das durch die Rahmen der Diapositive während der Belichtung abgedeckt wird, gross ist, ein dritter Rahmen verwendet werden, der mit gerahmten Diapositiven geladen ist, und es kann eine dritte Belichtung in derselben Weise wie bei dem zweiten Rahmen angewendet werden. Dies ist praktisch die Grenze bei normalen Diapositiven, d.h. bei 35 mm grossen Diapositiven. Wenn jedoch die Diapositive sehr viel kleiner sind, ihre Rahmen aber im wesentlichen dieselbe Grösse wie die Rahmen von 35 mm grossen Diapositiven haben, dann ist es auch möglich und sogar wünschenswert, einen vierten und sogar einen fünften Rahmen zu verwenden, um das Kopiermaterial vollständig auszunützen.

Die Erfindung wird nunmehr anhand der Zeichnungen erläutert. Es zeigen:

Fig. 1 eine Draufsicht auf ein gerahmtes 35 mm-grosses Diapositiv;

Fig. 2 eine Draufsicht auf ein gerahmtes Diapositiv der Grösse 126;

Fig. 3 eine perspektivische Ansicht eines Rahmens, der bei dem erfindungsgemässen Verfahren verwendet wird;

Fig. 4 eine perspektivische Ansicht eines zweiten Rahmens, der nach dem ersten Rahmen bei dem erfindungsgemässen Verfahren verwendet wird; und

Fig. 5 eine Draufsicht auf ein Blatt Abzugsmaterial mit 35 Kontaktabzügen, welche mittels des erfindungsgemässen Verfahrens und mit Hilfe von zwei Rahmen der Fig. 3 und 4 hergestellt worden sind.

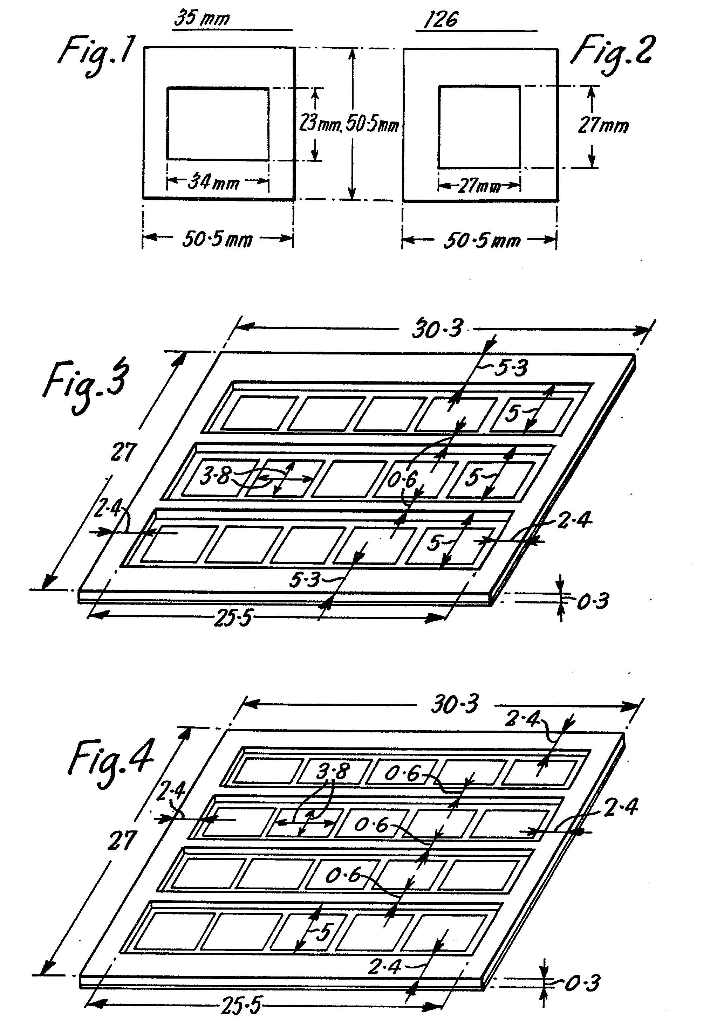

In Fig. 1 und 2 sind in mm die Flächen, die von den Diapositiven belegt werden, und die Flächen angegeben, die von den Papp- oder Kunststoffrahmen belegt werden. Nur etwa ein Drittel der gesamten Fläche ist transparent oder lichtdurchlässig.

In Fig. 3 und 4 sind in cm die Abmessungen von zwei rahmen dargestellt, die in Verbindung mit dem erfindungsgemässen Verfahren verwendet werden können. In Fig. 3 ist ein Rahmen dargestellt, in welchem 15 Diapositive entweder der Fig. 1 oder 2 angeordnet und gehaltert sein können. In Fig. 4 ist ein Rahmen dargestellt, der in Verbindung mit dem Rahmen der Fig. 3 verwendet werden kann. Hierbei können 20 Diapositive entweder der Fig. 1 oder 2 in diesen Rahmen eingelegt und gehaltert werden.

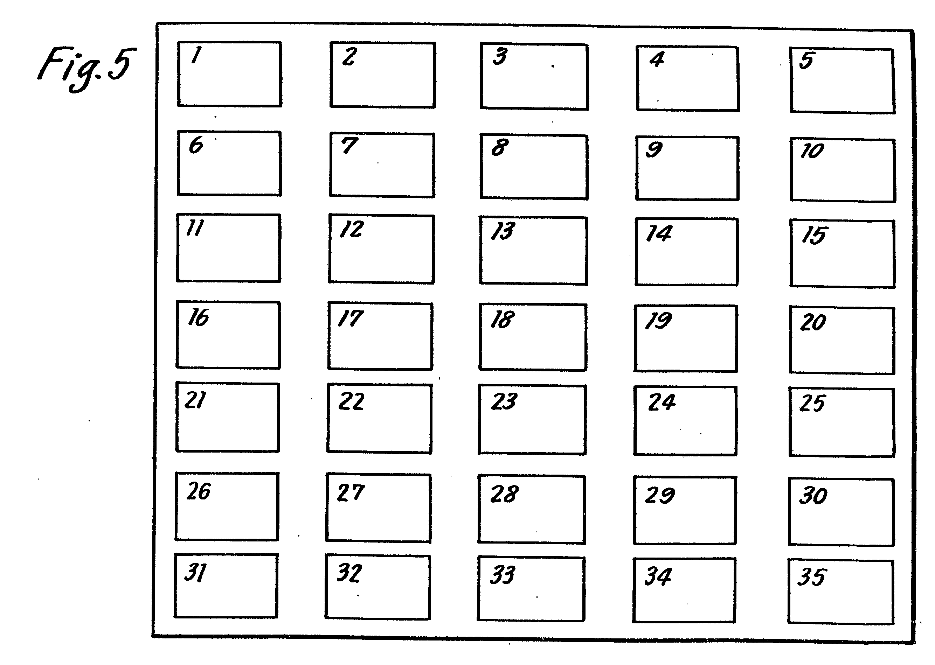

In Fig. 5 ist die Lage der 35 Kontaktabzüge dargestellt, die mit Hilfe der Rahmen der Fig. 3 und 4 erhalten werden.

Bei der Durchführung des erfindungsgemässen Verfahrens wird ein Blatt Farb-Kopiermaterial der Grösse 20,3 × 25,4 cm in einem Rahmengestell unter einem Vergrösserer angeordnet. Der Rahmen der Fig. 3 wird dann in dem Rahmengestell über dem Blatt Kopiermaterial angeordnet und festgelegt. Das Kopiermaterial wird dann über den Rahmen der Fig. 3 belichtet. Der Rahmen der Fig. 3 wird dann herausgenommen und durch den Rahmen der Fig. 4 ersetzt; hierauf wird das Kopiermaterial wieder belichtet. Auch dieser Rahmen wird dann wieder herausgenommen und das Kopiermaterial wird einer entsprechenden Farbverarbeitungsfolge unterzogen, um Kontaktabzüge zu schaffen. Ein spezieller Halterahmen kann verwendet werden, welcher sowohl das Kopiermaterial als auch die beiden Rahmen örtlich genau festlegt.

Folglich können mit Hilfe des erfindungsgemässen Verfahrens 35 Kontaktabzüge auf einem Blatt teueren Kopiermaterials der Grösse 20,3 x 25,4 cm erhalten werden. Wenn die gerahmten Diapositive nebeneinander auf das Kopiermaterial gelegt und dann belichtet worden sind, könnten nur 15 bis 20 Diapositive auf das Kopiermaterial gelegt werden.

Wie aus Fig. 5 zu ersehen ist, ist nur etwa die Hälfte des verfügbaren Kopiermaterials von Kontaktabzügen belegt. Mit Hilfe von drei Rahmen könnte mehr von dem Kopiermaterial ausgenutzt werden; jedoch werden dann die Schwierigkeiten bezüglich der Ausrichtung und der Lagegenauigkeit grösser.

## Patentansprüche

1. Verfahren zum Kopieren einer Anzahl gerahmter Diapositive, bei welchem die Diapositive in zueinander parallelen Reihen auf das Kopiermaterial aufbelichtet werden, dadurch gekennzeichnet, daß bei einer ersten Belichtung der Abstand zwischen den Bildflächen zweier aufeinanderfolgender Reihen und der Abstand der Bildflächen der ersten und letzten Reihe vom oberen bzw. unteren Rand des Kopiermaterials größer als die Höhe der Bildflächen der verwendeten Diapositive gewählt wird und dabei alle nicht durch eine Bildfläche eines gerahmten Diapositivs belichteten Bereiche des Kopiermaterials vor Belichtung geschützt werden, und daß bei einer anschließenden zweiten Belichtung die reihenweise Anordnung der nunmehr zu kopierenden gerahmten Diapositive so getroffen wird, daß ihre Bildbereiche jeweils über den bei der ersten Belichtung unbelichtet gebliebenen Bereichen zu liegen kommen und alle bei der ersten Belichtung belichteten Bereiche des Kopiermaterials vor Belichtung geschützt werden.

2. Verfahren gemäß Anspruch 1, dadurch gekennzeichnet, daß bei der ersten Belichtung zumindest der Abstand zwischen den Bildbereichen zweier aufeinanderfolgender Reihen von gerahmten Diapositiven mindestens doppelt so groß gewählt wird als die Bildhöhe der verwendeten Diapositive, daß die zweite Belichtung so erfolgt, daß der jeweilige Abstand zwischen dem unteren Bildrand einer bei der zweiten Belichtung erzeugten Bildreihe und dem obern Bildrand einer bei der ersten Belichtung erzeugten Bildreihe größer als die Bildhöhe der verwendeten Diapositive gewählt wird, da bei einer dritten Belichtung die gerahmten Diapositive so angeordnet werden, daß ihre Bildbereiche in die nach der zweiten Belichtung noch unbelichteten Bereiche des Kopiermaterials fallen, und daß bei der dritten Belichtung alle bei der ersten und zweiten Belichtung bereits belichteten Bereiche des Kopiermaterials vor weiterer Belichtung geschützt werden.

3. Vorrichtung zur Durchführung des Verfahrens nach Anspruch 1, gekennzeichnet durch einen ersten und einen zweiten Halterahmen für gerahmte Diapositive, welche für sich oder zusammen mit den Diarahmen Flächenbereiche abdecken, die größer sind als die Diapositive, und durch Mittel, welche die Halterahmen zwangsläufig so positionieren, daß die Bildfenster des zweiten Halterahmens zwischen die Bildfenster des ersten Halterahmens zu liegen kommen.

## Claims

1. A method for the copying of a plurality of framed positive transparencies, in which the positive transparencies are exposed onto the copying material in rows parallel to each other, characterized in that a first exposure the distance between the image areas of two consecutive rows and the distance of the image areas of the first and last row from the upper or lower edge of the copying material is selected greater than the height of the image areas of the positive transparencies used and thereby all areas of the copying material which are not exposed through an image area of a framed positive transparency are protected from exposure, and that in a subsequent second exposure the arrangement in rows of the framed positive transparencies now to be copied is such that their image areas in each case come to lie over the areas remaining unexposed on the first exposure and all areas of the copying material which were exposed on the first exposure are protected from exposure.

2. A method according to Claim 1, characterized in that on the first exposure at least the distance between the image areas of two consecutive rows of framed positive transparencies is selected at least twice as great as the image height of the positive transparencies used, that the second exposure takes place such that the respective distance between the lower margin of image of a row of images produced on the second exposure and the upper margin of image of a row of images produced on the first exposure is selected greater than the image height of the positive transparencies used, that on a third exposure the framed positive transparencies are arranged so that their image areas fall within the areas of the copying material which are still unexposed after the second exposure, and that on the third exposure all the areas of the copying material which have already been exposed on the first and second exposure are protected from further exposure.

3. An apparatus to carry out the method according to Claim 1, characterized by a first and a second carrier frame for framed positive transparencies, which by themselves or together with the transparency frames cover surface areas, which are greater than the positive transparencies, and by means which position the carrier frames automatically such that the image apertures of the second carrier frame come to lie between the image apertures of the first carrier frame.

**Revendications**

1. Procédé de copie d'un certain nombre de diapositives encadrées, dans lequel on expose les diapositives en rangées parallèles sur le matériau de copie, caractérisé par le fait que, dans une première exposition, on choisit plus grandes que la hauteur des surfaces d'image des diapositives utilisées la distance entre les surfaces d'image de deux rangées successives et la distance entre les surfaces d'image des première et dernière rangées et les bords respectivement supérieur et inférieur du matériau de copie et l'on protège en même temps de l'exposition toutes les zones du matériau de copie non exposées à travers une surface d'image d'une diapositives encadrée, puis, dans un deuxième exposition subséquente, on procède à la disposition en rangées des diapositives encadrées à copier alors d'une façon telle que leurs surfaces d'image viennent se poser chaque fois au-dessus des zones restées non exposées lors de la première exposition et que toutes les zones du matériau de copie exposées dans cette même première exposition soient protégées contre l'exposition.

2. Procédé selon la revendication 1 caractérisé par le fait que, dans la première exposition, on choisit au moins double de la hauteur d'image des diapositives utilisées au moins la distance entre les surfaces d'image de deux rangées successives de diapositives encadrées et l'on procède à la deuxième exposition en sorte que la distance entre le bord d'image inférieur d'une rangée d'images engendrée dans la deuxième exposition et le bord d'image supérieur d'une rangée engendrée dans la première exposition soit chaque fois supérieure à la hauteur d'image des diapositives utilisée, puis, dans une troisième exposition, on dispose les diapositives encadrées en sorte que leurs zones d'image tombent dans les zones du matériau de copie non encore exposées après la deuxième exposition et, dans la troisième exposition, on protège d'une exposition supplémentaire toutes les zones du matériau de copie déjà exposées lors des première et deuxième expositions.

3. Dispositif de mise en oeuvre du procédé selon la revendication 1 caractérisé par un premier et un deuxième cadre de maintien pour diapositives encadrées qui, par eux-mêmes ou conjointement avec les cadres des diapositives, couvrent des zones de surface qui sont plus grandes que les diapositives et par des moyens qui positionnent obligatoirement les cadres de maintien en sorte que les fenêtres d'image du deuxième viennent se placer entre les fenêtres d'image du premier.

*Fig.1*

35 mm

34mm

23mm. 50·5mm

50·5 mm

*Fig.2*

126

27mm

27mm

50·5 mm

*Fig.3*

30·3

5·3

5

3·8

0·6

5

2·4

2·4

27

5·3

25·5

5

0·3

*Fig.4*

30·3

2·4

2·4

2·4

3·8

0·6

0·6

0·6

27

5

25·5

2·4

0·3

1

Fig.5

| 1 | 2 | 3 | 4 | 5 |
| 6 | 7 | 8 | 9 | 10 |
| 11 | 12 | 13 | 14 | 15 |
| 16 | 17 | 18 | 19 | 20 |
| 21 | 22 | 23 | 24 | 25 |
| 26 | 27 | 28 | 29 | 30 |
| 31 | 32 | 33 | 34 | 35 |

0 008 122